# FASCICULE DE BREVET EUROPEEN

(11) **EP 1 108 457 B1**
(45) Date de publication et mention de la délivrance du brevet: **31.03.2004**
(21) Numéro de dépôt: 00420255.2
(22) Date de dépôt: 08.12.2000
(51) Int. Cl.: B01D 29/23, B01D 29/01, B01D 29/27, B01D 29/58, B01D 36/02

(54) **Dispositif de filtration de l'eau d'un bassin de piscine**
Filtervorrichtung für Schwimmbecken
Filtering device for swimming pools

(30) Priorité: 13.12.1999 FR 9915924
(43) Date de publication de la demande: 20.06.2001
(73) Titulaire: Pisicines Desjoyaux S.A., 42480 La Fouillouse (FR)
(72) Inventeur: Desjoyaux, Jean Louis, 42580 L'Etrat (FR); Desjoyaux, Pierre Louis, 42580 L'Etrat (FR); Jandros, Catherine, 42580 L'Etrat (FR)
(74) Mandataire: Thivillier, Patrick

(56) Documents cités:
- EP-A- 0 423 043
- GB-A- 1 205 977
- US-A- 4 818 398
- US-A- 5 137 632

## Description

L'invention se rattache au secteur technique de la filtration de l'eau des bassins de piscines.

On connaît différents moyens pour assurer la filtration de l'eau et plus particulièrement la filtration de l'eau des bassins de piscines. On peut citer par exemple, à titre indicatif nullement limitatif, les filtres à sable, les cartouches filtrantes, .... Plus particulièrement, l'invention concerne un dispositif de filtration du type de celui défini dans le brevet FR 89.13638, dont les demandeurs de la présente sont également titulaires.

Le dispositif de filtration décrit dans ce brevet, comprend un système d'aspiration et de refoulement et à filtre. Le filtre est constitué par un manchon et un support sous forme d'un puits dont le fond est en relation avec le système d'aspiration. Le manchon est ouvert à l'une de ses extrémités, et fermé à son autre extrémité opposée et est composé d'un matériau non tissé sous forme d'un feutre aiguilleté ayant des capacités de filtration. Le manchon a une forme tronconique de section dégressive en direction de son extrémité fermée. Le manchon est monté à l'intérieur du puits avec capacité d'amovibilité pour être facilement lavable. L'extrémité ouverte du manchon coopère avec des moyens de positionnement et de retenue par rapport au puits.

Pour assurer la filtration en tant que telle, le fond du puits est accouplé au système d'aspiration de sorte que l'eau qui arrive directement, par l'extrémité ouverte du manchon, est évacuée par le système d'aspiration et de refoulement, à l'intérieur du bassin de la piscine, après avoir été soumise au pouvoir filtrant dudit manchon.

Cette solution comporte de nombreux avantages par rapport à l'état de la technique dans le domaine de la filtration. En effet, comme indiqué, le manchon de filtration en tant que tel est monté à l'intérieur du puits, avec capacité d'amovibilité pour être facilement lavable.

Par contre, l'opération de lavage du manchon de filtration, peut s'avérer parfois fastidieuse. Il n'est cependant pas concevable de le jeter, à chaque intervention, afin de le remplacer par un manchon neuf. En effet, le manchon, sous forme d'un feutre aiguilleté, n'est pas conçu pour être jeté après chaque utilisation, si l'on considère les coûts qu'il représente.

On peut citer également l'enseignement du brevet US 4.818.398. Ce brevet divulgue un manchon filtrant monté à l'intérieur d'un cylindre rigide dont la périphérie est percée d'une pluralité de trous. Le manchon filtrant peut être enlevé pour être nettoyé. Le système de filtration décrit dans ce brevet est particulièrement utilisé pour la séparation des particules solides dans des liquides, et notamment dans les industries chimiques et pétrolières. On conçoit qu'un tel système de filtration peut difficilement être adapté à la filtration de l'eau des bassins de piscines.

Le problème que se propose de résoudre l'invention est de pouvoir, dans le domaine technique de la filtration des bassins de piscines, jeter et/ou éventuellement laver, après une durée de cycle de filtration considérée comme normale, l'élément filtrant en tant que tel. Bien évidemment, ce caractère jetable de l'élément filtrant nécessite la sélection particulière d'un matériau au niveau de ses capacités de filtration, de sa résistance mécanique, de sa tenue dans l'eau et de son coût de revient qui doit être particulièrement bas.

Pour résoudre un tel problème, il a été conçu et mis au point un dispositif de filtration de l'eau d'un bassin de piscine au moyen d'un ensemble filtrant conforme aux caractéristiques la revendication 1.

Pour résoudre le problème posé d'assurer le montage de l'ensemble filtrant par rapport au puits, l'extrémité ouverte du manchon constituant le premier élément est équipée de moyens d'appui et de positionnement coopérant avec l'ouverture du puits. L'extrémité ouverte du manchon constituant le deuxième élément est retournée autour des moyens d'appui et de positionnement.

Avantageusement, chaque manchon a une forme tronconique de section dégressive en direction de son extrémité libre.

L'invention est exposée ci-après plus en détail à l'aide des figures des dessins annexés dans lesquels :

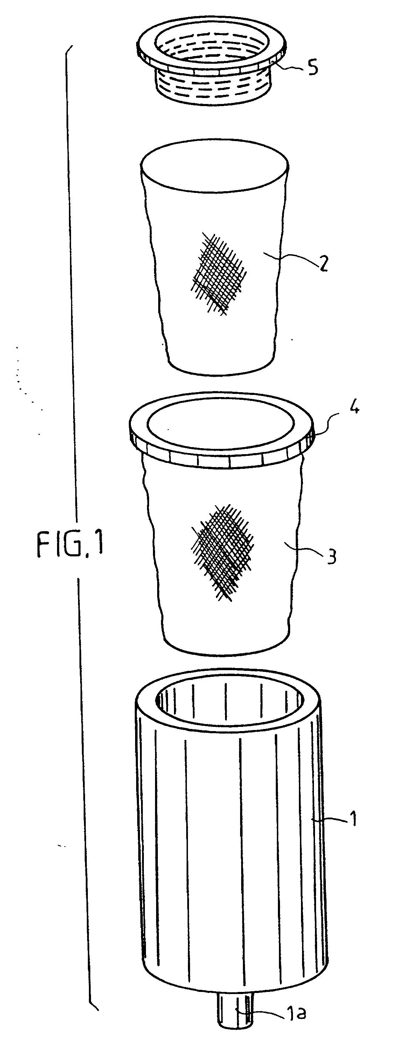

- la figure 1 est une vue en perspective avant montage des principaux éléments du dispositif de filtration selon l'invention ;
- la figure 2 est une vue en coupe longitudinale du dispositif de filtration ;
- la figure 3 est une vue en coupe à caractère schématique montrant l'application du dispositif de filtration du bloc compact de piscine avec système d'aspiration et de refoulement.

D'une manière connue, l'ensemble filtrant est monté dans un puits cylindrique (1) dont le fond est assujetti en (la) à un système d'aspiration et de refoulement afin que l'eau, par la dépression créée sous l'effet de l'aspiration, puisse passer au travers de l'ensemble filtrant et être évacuée par ledit système d'aspiration et de refoulement à l'intérieur du bassin de la piscine, après avoir été soumise au pouvoir filtrant dudit ensemble.

Selon l'invention, l'ensemble filtrant est constitué d'un premier élément (2) en matériau jetable et ayant des capacités de filtration. Ce premier élément (2) coopère avec un deuxième élément (3) faisant office d'armature de positionnement et de rigidité, tout en étant apte à laisser passer l'eau et retenir certaines impuretés. Les éléments (2 et 3) sont constitués par un manchon ouvert à une de ses extrémités et fermée à son autre extrémité opposée. Le premier élément (2) est destiné à être logé à l'intérieur du deuxième élément (3) constituant une armature de rigidité et de positionnement.

Le premier élément jetable (2) est en tissu de polypropylène thermolié ayant une forte capacité de filtration. Ce tissu de polypropylène thermolié constitue une structure maillée délimitant des interstices d'environ 15 microns. Le deuxième élément (3), qui constitue le manchon support de rigidité (3), est en tissu polypropylène aiguilleté ayant une faible capacité de filtration. Ce tissu polypropylène aiguilleté constitue une structure ajourée délimitant des interstices d'environ 50 microns.

Sans pour cela sortir du cadre de l'invention, le deuxième élément (3) peut être constitué par un corps volumétrique de forme générale cylindrique notamment, constituant une structure rigide ou semi-rigide, et ajourée selon sa périphérie.

Les éléments (2 et 3) ont une forme tronconique de section dégressive en direction de leur extrémité fermée.

L'extrémité ouverte du deuxième élément (3) présente des moyens d'appui et de positionnement sous forme d'une collerette (4) apte à prendre appui sur la bordure périphérique supérieure de l'ouverture du puits cylindrique (1). Cette collerette (4) est fixée au deuxième élément (3), d'une manière démontable au moyen par exemple d'un système de rubans complémentaires mâle-femelle du type autoagrippant, sans pour cela exclure d'autres moyens de fixation.

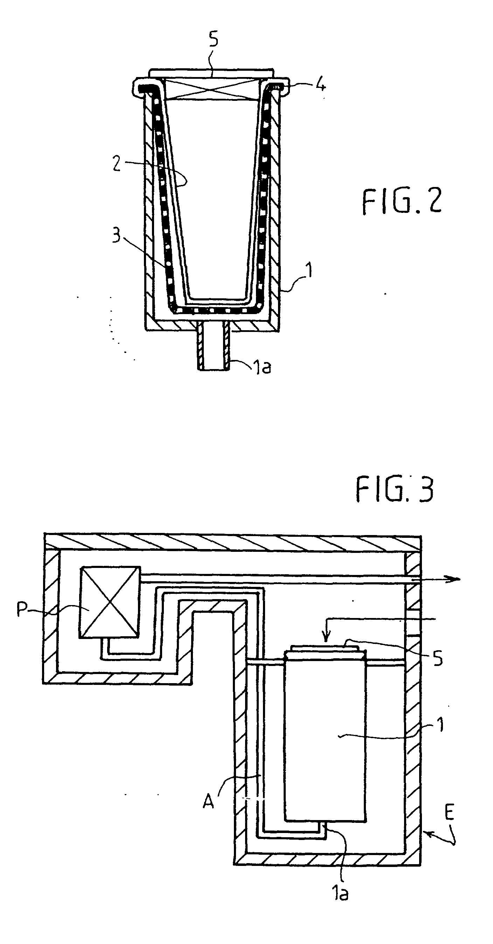

Le premier élément (2) est logé à l'intérieur du deuxième élément (3) et retourné au niveau de son extrémité ouverte par rapport à la collerette (4). Ainsi le deuxième élément (3), équipé du premier élément (2), est logé à l'intérieur du puits (1), la collerette (4) venant en appui sur le rebord de l'ouverture dudit puits (1). Un préfiltre (5) est monté au niveau du deuxième élément (3). On renvoie à la figure 2 qui montre le montage du dispositif de filtration.

Dans le cas d'une application du dispositif à la filtration de l'eau d'un bassin de piscine, le puits cylindrique (1), équipé comme indiqué de l'ensemble de filtration selon les caractéristiques de l'invention, est monté dans un ensemble compact (E) sous forme d'un bloc ou d'un panneau. Le puits cylindrique (1) est relié au moyen de la crépine (la) au circuit d'aspiration (A) d'une pompe (P). La mise en route de la pompe (P) créé une dépression à l'intérieur du puits cylindrique (1), L'eau, en provenance du bassin de la piscine, passe au travers d'une ouverture connue sous le nom de SKIMMER pour être aspirée à travers des éléments (2-3) puis est refoulée à l'intérieur du bassin de la piscine.

Lorsque l'utilisateur considère que l'ensemble de filtration est encrassé, il suffit de retirer le premier élément (2) rempli des différentes impuretés, de le jeter et de le remplacer par un, entièrement neuf.

Compte tenu de ces disposition, il n'est donc plus nécessaire de procéder au lavage de l'élément de filtration en tant que tel. A noter qu'il n'est pas nécessaire, à chaque changement des éléments (2), de retirer le deuxième élément (3).

Les avantages ressortent bien de la description.

## Revendications

1. Dispositif de filtration de l'eau d'un bassin de piscine au moyen d'un ensemble filtrant monté dans un puits cylindrique (1), dont le fond est accouplé à un système d'aspiration et de refoulement, l'eau passant au travers dudit ensemble constitué d'un premier élément (2) en matériau jetable et ayant des capacités de filtration et logé à l'intérieur d'un deuxième élément (3) faisant office d'armature de positionnement et de rigidité audit premier élément (2) en étant apte à laisser passer l'eau et retenir certaines impuretés, lesdits éléments (2) et (3) étant constitués par un manchon ouvert à l'une de ses extrémités et fermé à son extrémité opposée,
**caractérisé en ce que** :
- le premier élément (2) est un tissu polypropylène thermolié ayant une forte capacité de filtration et constitue une structure ajourée délimitant des interstices d'environ 15 microns ;
- le deuxième élément (3) est un tissu polypropylène aiguilleté ayant une faible capacité de filtration et constitue une structure ajourée délimitant des interstices d'environ 50 microns ;
- l'eau, par la dépression créée par l'aspiration, passe au travers du premier élément (2) et du deuxième élément (3), et est évacuée par ledit système d'aspiration et de refoulement, à l'intérieur du bassin de la piscine après avoir été soumise au pouvoir filtrant notamment du premier élément (2).

2. Dispositif selon la revendication 1, **caractérisé en ce que** l'extrémité ouverte du manchon constituant le deuxième élément (3) est équipée de moyens d'appui et de positionnement (4) coopérant avec l'ouverture du puits (1).

3. Dispositif la revendication 2, **caractérisé en ce que** l'extrémité ouverte du manchon constituant le premier élément (2) est retournée autour des moyens d'appui et de positionnement (4).

4. Dispositif selon la revendication 1, **caractérisé en ce que** chaque manchon a une forme tronconique de section dégressive en direction de son extrémité libre.

## Claims

1. Device for filtering the water in the basin of a swimming pool by means of a filtration assembly mounted in a cylindrical well (1), the bottom of which is connected to a suction and delivery system, the water passing through the said assembly and the said assembly consisting of a first element (2) made of a disposable material and having filtration capacities and being housed inside a second element (3) acting as a locating and stiffening support for the said first element (2) while being suitable to allow the water to pass through it and retain certain impurities, the said elements (2) and (3) forming a sleeve which is open at one end and closed at the other end,
**characterized in that:**
- the first element (2) is a thermobonded polypropylene fabric having a high filtration capacity and forms a perforated structure defining interstices of approximately 15 microns;
- the second element (3) is a needlepunched polypropylene fabric having a low filtration capacity and forms a perforated structure defining interstices of approximately 50 microns; and
- because of the low pressure created by the suction, the water passes through the first element (2) and through the second element (3), and is evacuated by the said suction and delivery system into the basin of swimming pool after having been subjected to the filtration power of the first element (2) in particular.

2. Device according to Claim 1, **characterized in that** the open end of the sleeve forming the second element (3) has bearing and locating means (4) that fit onto the opening of the well (1).

3. Device according to Claim 2, **characterized in that** the open end of the sleeve forming the first element (2) is folded back around the bearing and locating means (4).

4. Device according to Claim 1, **characterized in that** each sleeve is of a frustoconical form with a cross section that decreases towards its free end.

## Patentansprüche

1. Filtereinrichtung für das Wasser eines Schwimmbeckens mittels einer Filtriereinheit, die in einem zylinderförmigen Schacht (1) montiert ist, deren Boden mit einem Ansaugund Fördersystem verbunden ist, wobei das Wasser durch die genannte Filtriereinheit fließt, die aus einem ersten Element (2) aus Einwegmaterial besteht, und Filtereigenschaften besitzt, und in einem zweiten Element (3) angeordnet ist, das als Ausrichtungsarmatur dient, und dem ersten Element (2) Widerstandsfähigkeit verleiht, wobei Wasser durchfließen kann und bestimmte Verunreinigungen zurückgehalten werden, und die genannten Elemente (2) und (3) einen Stutzen besitzen, der an einem seiner Enden offen und an seinem gegenüberliegenden Ende geschlossen ist,
**dadurch gekennzeichnet, dass** :
- es sich bei dem ersten Element (2) um ein Polypropylengewebe [thermolié?] mit starker Filterkapazität handelt, das eine gelochte Struktur besitzt, die Zwischenräume von ca. 15 Mikron begrenzt;
- es sich bei dem zweiten Element (3) um ein genadeltes Polypropylengewebe mit geringer Filterkapazität handelt, das eine gelochte Struktur besitzt, die Zwischenräume von ca. 50 Mikron begrenzt;
- das Wasser durch den, aufgrund der Ansaugung hervorgerufenen, Unterdruck durch das erste Element (2) und das zweite Element (3) fließt, und über das genannte Ansaugund Fördersystem in das Schwimmbecken abgeführt wird, nachdem es zuvor der Filterkraft, insbesondere des ersten Elementes (2), ausgesetzt war.

2. Einrichtung nach Anspruch 1, **dadurch gekennzeichnet, dass** das offene Ende des Stutzens, der das zweite Element (3) darstellt, mit Auflage- und Ausrichtelementen (4) ausgestattet ist, die mit der Öffnung des Schachtes (1) zusammenwirken.

3. Einrichtung nach Anspruch 2, **dadurch gekennzeichnet, dass** das offene Ende des Stutzens, der das zweite Element (3) darstellt, um die Auflage- und Ausrichtelemente (4) herum gedreht wird.

4. Einrichtung nach Anspruch 2, **dadurch gekennzeichnet, dass** jeder Stutzen eine kegelstumpfartige Form mit abnehmendem Querschnitt zu seinem freien Ende hin besitzt.
